Europäisches Patentamt

**European Patent Office**

**Office européen des brevets**

(19)

(11) Numéro de publication : **0 149 371**
**B1**

(12)

# FASCICULE DE BREVET EUROPÉEN

(45) Date de publication du fascicule du brevet :
23.12.87

(21) Numéro de dépôt : 84401992.7

(22) Date de dépôt : 04.10.84

(51) Int. Cl.⁴ : **C 09 D  7/12, C 09 D  5/00,**
**C 09 D  9/00, C 09 D  9/04**

(54) **Revêtement temporaire réversible pour le traitement de surfaces et solution de neutralisation.**

(30) Priorité : 06.10.83 FR 8315900
06.10.83 FR 8315901

(43) Date de publication de la demande :
24.07.85 Bulletin 85/30

(45) Mention de la délivrance du brevet :
23.12.87 Bulletin 87/52

(84) Etats contractants désignés :
AT BE CH DE FR GB IT LI LU NL SE

(56) Documents cités :
US-A- 3 035 926
US-A- 3 063 873
US-A- 3 216 945
US-A- 3 320 196
US-A- 4 185 970

(73) Titulaire : **SICOM**
**134, avenue du 14 Juillet**
**F-76300 Sotteville-les-Rouen (FR)**

(72) Inventeur : **Salkin, André**
**134, avenue du 14 Juillet**
**F-76300 Sotteville-les-Rouen (FR)**

(74) Mandataire : **Derambure, Christian**
**Cabinet BUGNION ASSOCIES SARL 116, boulevard**
**Haussmann**
**F-75008 Paris (FR)**

## Description

La présente invention concerne un procédé de formulation d'un vernis protecteur temporaire réversible et le procédé de traitement d'un tel vernis. Plus particulièrement l'invention concerne un procédé de formulation d'une solution de neutralisation d'un vernis de protection temporaire, afin de faciliter la mise en solution aqueuse de ce vernis temporaire ayant lieu au moment du rinçage.

On connaît des solutions de copolymères qui sont des associations de polymères, monomères et leurs homologues, dans des solvants et des diluants. Lorsque la solution de copolymère est appliquée sur une surface à protéger, après évaporation du solvant, il se forme une couche de vernis protecteur. Cette couche de vernis protecteur peut être rendue sensible à l'eau par traitement de sa surface par une solution de déprotection qui est une solution de neutralisation. La solution de neutralisation permet donc d'obtenir une réversibilité de la solubilité du vernis de protection dans l'eau.

Cette technique chimique de protection est largement utilisée dans différents domaines industriels tels que la protection de pièces mécaniques ou la protection d'éléments de constructions métalliques.

La déprotection par neutralisation est possible lorsque l'on met en contact la solution de déprotection suffisamment longtemps, jusqu'à mise en solution totale du film protecteur, principalement en mettant l'objet à déprotéger à tremper dans un bain de neutralisation.

Cependant, lorsqu'il s'agit de pièces dont les dimensions et le volume sont trop importants pour les mettre dans un bain de déprotection, la neutralisation doit être effectuée par projection ou pulvérisation. Dans ce cas, la déprotection est moindre, du fait qu'il existe des surépaisseurs ainsi que des parties verticales protégées par le vernis qui ne sont pas déprotégées. En effet, l'écoulement de la solution de neutralisation l'empêche d'agir correctement sur toute la surface du film de vernis. Ainsi, la déprotection n'est pas correcte sur toute la surface de l'objet et il peut rester des endroits où le vernis subsiste.

Par exemple, à partir d'une formulation de méthacrylate de méthyle-butyle dans un milieu solvant et diluant, avec un acide acrylique et méthacrylique, on peut procéder selon la technique antérieure à l'application de la formulation sur des pièces métalliques peintes ou non peintes. Après évaporation du solvant, et par exemple après un temps de stockage de six mois, on procède en général au traitement de déprotection à l'aide d'une solution de neutralisation basique ou aminée. La déprotection a lieu par pulvérisation. La solution de neutralisation transforme le film acide insoluble en sel soluble. Cependant, comme on l'a mentionné plus haut sur les parties verticales des objets à déprotéger, ainsi que sur les surépaisseurs du film de vernis, la déprotection n'est pas complète du fait de l'écoulement de la solution de neutralisation avant qu'elle agisse.

Par ailleurs, on connaît la possibilité de rendre relativement insensibles à l'eau, des associations de polymères, monomères et leurs homologues appelés généralement copolymères. Par application de ces associations de monomères et polymères, sur des surfaces à protéger, on obtient des vernis relativement insensibles à l'eau. On utilise également de manière connue les acrylates en tant que composants de solution de vernis. Ces vernis sont émulsionnables ou sont mis en solution dans l'eau après mise en contact d'une solution de neutralisation. Cette solution de neutralisation permet d'obtenir la réversibilité de la solution de vernis dans l'eau.

On utilise cette technique chimique de protection dans différents domaines industriels, par exemple à la protection de pièces mécaniques ou la protection de constructions métalliques.

La déprotection par des vernis réversibles est possible lorsque l'on met en contact l'objet protégé avec la solution de déprotection, jusqu'à mise en solution totale du film de vernis protecteur. De préférence, selon la technique connue, on met l'objet à déprotéger à tremper dans un bain de neutralisation.

Cette technique nécessite donc des pièces dont les dimensions et le volume ne sont pas trop importants pour pouvoir les mettre dans un bain de déprotection. Lorsqu'il s'agit de pièces de dimensions et de volumes plus importants, la neutralisation s'effectue par projection ou pulvérisation de la solution permettant la solubilisation du vernis réversible.

Cependant, le résultat obtenu n'est pas complètement satisfaisant et la déprotection laisse à désirer. Ainsi, les surépaisseurs de vernis et les couches de vernis, disposées sur les parties verticales des objets, ne sont pas totalement dissoutes par ce procédé de projection et/ou pulvérisation de la solution de neutralisation. Ceci pourrait être dû au fait que la solution de neutralisation s'écoule par gravité, et de ce fait, la réaction de neutralisation permettant la solubilisation du vernis n'a pas le temps de se faire complètement sur ces surépaisseurs de vernis ou sur les parties verticales recouvertes de vernis.

Par exemple, lorsqu'on applique sur des pièces métalliques peintes ou non peintes une solution de métacrylate de méthyle-butyle en milieu solvant et diluant, puis lorsque l'on évapore les solvants et diluants, on obtient un vernis de protection. Puis, après un temps de stockage de six mois des objets et des surfaces protégées, on traite ces derniers par une solution de neutralisation permettant la déprotection. Cette solution de neutralisation est basique ou aminée. Par pulvérisation on obtient donc la neutralisation du film par transformation de ce film acide en sel soluble. Cependant, il est connu qu'une telle solubilisation est incomplète, notamment lorsqu'on a des surépaisseurs du film de vernis, ainsi que les parties verticales des objets.

Le brevet US 3 063 873 décrit une composition de peinture contenant l'acide oléique et de la triéthanolamine comme agents saponificateurs.

De même, la demande de brevet EP 115 694 décrit une résine acrylique rendue réversible par le dioctylsufosuccinate de sodium et le diméthylaminoéthanol, comme agents saponificateurs.

Le fait d'incorporer des agents saponificateurs à la solution de traitement des surfaces est également connu.

Ainsi, le brevet US 3 216 945 décrit un décapant pour peintures, contenant des métasilicates, de l'acide laurique et de la diéthanolamine.

De même, le brevet US 4 185 970 décrit un décapant aqueux pour peintures, contenant un surfactant non ionique, des acides résiniques et un alcali.

La présente invention vise à pallier ces inconvénients.

A cet effet, le procédé selon l'invention vise à fournir un agent de surface de protection, et à faciliter sa mise en solution aqueuse au moment de la déprotection ultérieure.

L'invention concerne donc un procédé de formulation d'un vernis protecteur temporaire réversible, de préférence à l'eau, consistant à mettre en solution au moins un polymère ou copolymère d'un monomère et un/des homologues, dans un solvant et éventuellement dans un diluant, le procédé de formulation étant tel qu'on ajoute un agent capable de former un savon ou un saponide, à savoir un produit de réaction d'un corps gras ou dérivé de corps gras avec une base ou une amine.

Le savon et/ou le saponide se forme à l'intérieur du vernis soit au moment du dépôt, soit partiellement au moment de la réaction de neutralisation.

Cet agent de formation d'un savon et/ou saponide est capable de former le produit de réaction d'un corps gras ou un dérivé de corps gras avec une base ou une amine.

On recouvre ainsi une surface à protéger de la solution obtenue à partir du procédé de formulation selon l'invention afin d'obtenir après séchage ou évaporation des solvants, un film copolymère de protection relativement insensible à l'eau en l'absence d'un traitement de neutralisation.

L'invention est remarquable du fait que l'on améliore la réversibilité d'un film copolymère de solubilité réversible ; au contact d'une solution de neutralisation, la solubilité à l'eau étant améliorée par rapport à la solubilité des revêtements de la technique antérieure.

Selon la présente invention, l'agent formant le savon et/ou le saponide est choisi parmi les corps gras, les acides gras et les esters.

La solution obtenue à partir du procédé de formulation selon l'invention contient par exemple un copolymère de méthacrylate de méthylebutyle, de l'acide méthacrylique, de l'alcool isobutylique et de l'acide oléique en tant qu'agent de saponification.

L'invention concerne en outre un procédé de traitement d'un vernis de protection temporaire réversible par une solution facilitant la mise en solution aqueuse du vernis, au moment de la déprotection par une solution aqueuse de neutralisation.

Le procédé de traitement d'un vernis de protection temporaire constitué d'au moins un copolymère réversible déposé sur une surface, à laquelle on applique à température ambiante une solution aqueuse contenant au moins un agent de neutralisation du vernis associé à au moins un agent formant un savon et/ou un saponide et/ou un ester, à savoir, un produit de réaction d'un corps gras ou dérivé de corps gras avec une base ou une amine, pour améliorer la solubilité aqueuse du vernis lors de la déprotection, est selon l'invention, tel que le savon et/ou le saponide sont formés pendant l'application de la solution de protection sur le vernis.

La solution de déprotection est appliquée selon un exemple d'application de l'invention plusieurs mois après l'application de la solution contenant l'agent formant le savon et/ou le saponide sur le vernis. Cette solution de déprotection est appliquée notamment six mois après l'application de la solution formant savon et/ou saponide.

De préférence, l'agent formant un savon et/ou un saponide est choisi parmi les corps gras, les acides gras, les esters.

La solution de neutralisation a selon l'invention un pH compris entre 7,1 et 14, de préférence un pH égal à 12,6.

Enfin, selon l'invention, la solution de neutralisation contient au moins une base telle que NaOH et éventuellement un tensio-actif, détergent minéral, et un solvant.

Le vernis est un vernis copolymère réversible à base de monomères, homomères, homopolymères, en solution dans un diluant, qui est évaporé pour former un film ou vernis protecteur.

Selon le procédé de la présente invention, on forme à froid avant ou au cours de la neutralisation du vernis réversible, un savon et/ou un saponide.

L'invention est remarquable en ce sens que, même après évaporation totale de l'eau contenue dans la solution de neutralisation, le savon et/ou le saponide devient relativement dur, et en mélange avec le vernis et plusieurs heures et même plusieurs mois après, ce mélange formé par le vernis et le savon et/ou le saponide reste facilement soluble à l'eau, de préférence à l'eau froide. Ainsi, selon le procédé de l'invention, on peut se permettre de laisser sécher la solution de neutralisation, ce qui n'est pas le cas lorsque l'on utilise une solution de neutralisation de la technique antérieure contenant uniquement une base ou amine, sans agent formant un savon ou un saponide.

De préférence, on applique la solution de neutralisation par projection ou pulvérisation.

Les solutions liquides appliquées lors du procédé de traitement d'un vernis de protection temporaire peuvent en outre contenir des additifs tels que par exemple, divers formulateurs comme des tensio-actifs, des agents épaississants, des détergents moussants, des produits actifs contre les bactéries notamment des bactéricides et/ou des bactériostatiques.

On prépare une solution n° 1 conforme au procédé de formulation de la technique antérieure.

Cette solution n° 1 contient :

| | |
|---|---|
| un diluant essence D | 460,0 g |
| un méthacrylate de méthyle-butyle | 93,5 g |
| acide méthacrylique | 0,5 g |
| alcool isobutylique | 224,0 g |

On prépare une solution n° 2 selon la présente invention.

Solution n° 2 :

| | |
|---|---|
| essence D | 460,0 g |
| corps capable de former un produit de réaction d'un corps gras ou dérivé de corps gras avec une base ou une amine | 2,0 g |
| méthacrylate de méthyle-butyle | 93,5 g |
| acide méthacrylique | 0,5 g |
| alcool isobutylique | 224,0 g |

On applique sur des surfaces métalliques peintes de 1,50 m de hauteur sur 1,0 m de largeur d'une part la composition n° 1, et, d'autre part, la composition n° 2.

On effectue ensuite un séchage accéléré des surfaces ainsi revêtues par extraction à chaud des solvants, ou séchage à l'air libre.

On effectue un stockage d'une durée de 1 mois, de trois mois, de six mois, de douze mois ou de vingt-quatre mois.

Puis on procède ensuite à une déprotection des plaques qui sont placées verticalement par rapport au sol.

La solution de neutralisation pour la déprotection est composée de KOH et d'un tensio-actif, une solution ayant un pH basique, de préférence de 12,6.

Les résultats s'agissant de la composition n° 1 sont les suivants :

Après application par pulvérisation de la solution de neutralisation de déprotection on constate que le coefficient de déprotection est de 60 % après 3 min de contact avec la solution de neutralisation, puis rinçage :

60 % après 6 min de contact avec la solution de neutralisation puis rinçage,

70 % après une seconde application de la solution de neutralisation, après 4 min après la première application et, ensuite un temps d'attente avant rinçage de 7 min,

1 à 4 % après 60 min de contact avec la solution de neutralisation, puis rinçage.

Les plaques qui ont été revêtues par la composition n° 2, selon la présente invention, ont des coefficients de déprotection de :

90 % après 3 min de contact avec la solution de neutralisation, puis rinçage,

98 à 100 % après 6 min de contact avec la solution de neutralisation, puis rinçage,

100 % après une seconde application de la solution de neutralisation, 4 min après la première application, et en attendant 7 min avant rinçage,

100 % après 60 min de contact avec la solution de neutralisation qui s'est partiellement écoulée et rinçage postérieur.

Les rinçages sont effectués dans les deux cas avec de l'eau froide. On remarque que les plaques revêtues de la composition n° 1 sont difficiles à rincer, tandis que les plaques revêtues de la composition n° 2, selon la présente invention, ont une grande facilité de rinçage.

On traite des tôles peintes ou non, qui ont environ 1,50 m de haut sur environ 1 m de large et qui sont placées verticalement.

On dépose un revêtement d'un vernis copolymère réversible sur ces tôles. La solution du vernis copolymère réversible est la suivante :

acrylate, méthacrylate de méthyle-butyle (95,5 g)

mélange d'acide acrylique, acide méthacrylique (0,5 g)

alcool isobutylique (224 g)

diluant : essence D (460 g).

On évapore le solvant et le diluant de cette solution du vernis copolymère réversible. On obtient un film qui recouvre les tôles. On recouvre ainsi 10 tôles.

Puis on applique sur les cinq premières tôles une solution de neutralisation numéro 1, de la technique antérieure.

Cette solution n° 1 contient :

KOH écailles (1,5 %)

phosphate disodique (0,2 %)

agent tensio-actif (4,5 %)

détergent minéral métasilicate (2,0 %)

eau qsp.

Le pH de la solution est environ 12,6.

On traite ensuite cinq tôles par une solution de neutralisation selon la présente invention contenant :

KOH écailles (1,5 %)

détergent minéral métasilicate (2,0 %)

phosphate disodique (0,2 %)

agent tensio-actif (2,0 %)

oléine (2,5 %).

pH : on règle la composition de telle manière que l'on obtienne un pH de 12,6.

Après un mois de stockage, après revêtement du vernis, les tôles sont traitées.

Le temps de contact de la solution n° 1 et n° 2 sur les tôles verticales est pour la moitié gauche des tôles, de trois minutes, pour la moitié droite des tôles, d'une heure.

Les plaques traitées par la solution n° 1 après trois minutes ont un coefficient de déprotection de 60 %.

Les plaques traitées par la solution n° 1 au bout d'une heure, puis rinçage, ont un coefficient de déprotection de 4 %.

Les plaques traitées par la solution n° 2, au bout de trois minutes, puis rinçage, ont un coefficient de déprotection de 90 %.

Les plaques traitées par la solution n° 2, puis rinçage au bout d'une heure, ont un coefficient de déprotection de 98 à 100 %.

Lorsque l'on effectue la déprotection des tôles après trois mois, six mois, douze mois, vingt-quatre mois de stockage, on obtient des résultats qui sont tels que les tôles traitées par la solution n° 1 sont de plus en plus difficiles à déprotéger, le coefficient de déprotection diminuant. Par contre, pour les tôles traitées par la solution n° 2, le coefficient de déprotection reste stable et le temps et les quantités de produit nécessaires pour effectuer une bonne déprotection n'ont pas besoin d'être augmentés.

Ainsi, la solution n° 2, du fait de la présence de l'oléine, permet d'obtenir une déprotection bien meilleure que la déprotection obtenue par la solution n° 1.

L'oléine est ici l'acide oléique lui-même ou un de ses esters.

**Revendications**

1. Procédé de formulation d'un vernis protecteur temporaire réversible à l'eau consistant à mettre en solution au moins un polymère ou copolymère formé d'un monomère et un/des homologues, dans un solvant et éventuellement un diluant, caractérisé par le fait qu'on ajoute un agent capable de former un savon et/ou un saponide, produit de réaction d'un corps gras ou dérivé de corps gras avec une base ou une amine.

2. Procédé selon la revendication 1, caractérisée par le fait que l'agent capable de former un savon et/ou un saponide est choisi parmi les corps gras, les acides gras, les esters.

3. Procédé de traitement d'un vernis de protection temporaire constitué d'au moins un copolymère réversible déposé sur une surface, à laquelle on applique à température ambiante une solution aqueuse contenant au moins un agent de neutralisation du vernis associé à au moins un agent formant un savon et/ou un saponide, constitué par un produit de réaction d'un corps gras ou un de ses dérivés avec une base ou une amine, pour améliorer la solubilité aqueuse du vernis lors de la déprotection, caractérisé par le fait que le savon et/ou saponide est formé pendant l'application de la solution de protection sur le vernis.

4. Procédé selon la revendication 3, caractérisé par le fait que l'agent formant un savon et/ou un saponide est choisi parmi les corps gras, les acides gras et les esters.

**Claims**

1. A process for producing a temporary protective varnish reversible in water comprising forming a solution of at least one polymer or copolymer formed from a monomer and one or more homologues in a solvent and possibly a diluent characterised by the fact that there is added an agent capable of forming a soap and/or a saponide, the reaction product of a fatty substance or derivative of a fatty substance with a base or an amine.

2. A process according to claim 1 characterised by the fact that the agent capable of forming a soap and/or a saponide is selected from fatty substances, fatty acids and esters.

3. A process for the treatment of a temporary protective varnish constituted by at least one reversible copolymer deposited on a surface, to which one applies at ambient temperature an aqueous solution containing at least one agent for neutralising the varnish associated with at least one agent forming a soap and/or a saponide, constituted by a reaction product of a fatty substance or one of its derivatives with a base or an amine, to increase the aqueous solubility of the varnish at the time of deprotection, characterised by the fact that the soap and/or the saponide is formed during the application of the protection solution on the varnish.

4. A process according the claim 3 characterised by the fact that the agent forming a soap and/or a saponide is selected from fatty substances, fatty acids and esters.

**Patentansprüche**

1. Verfahren zum Herstellen eines vorübergehenden reversiblen Schutzlacks aus Wasser, wobei mindestens ein Polymer oder Copolymer, das aus einem Monomer und einem/mehreren Homologen gebildet ist, in einem Lösungsmittel und evtl. einem Verdünnungsmittel gelöst wird, dadurch gekennzeichnet, daß ein Mittel zum Bilden einer Seife und/oder eines Saponides, das ein Reaktionsprodukt eines Fettes oder eines Derivates davon mit einer Base oder eines Amins ist, hinzugefügt wird.

2. Verfahren nach Anspruch 1, dadurch gekennzeichnet, daß das Mittel zum Bilden einer Seife und/oder eines Saponides ausgewählt wird aus Fetten, Fettsäuren oder Estern.

3. Verfahren zum Behandeln eines vorübergehenden Schutzlacks, der aus mindestens einem reversiblen Copolymer besteht, das auf eine Oberfläche aufgebracht ist, auf der eine wässrige Lösung bei Umgebungstemperatur aufgebracht ist, welche zumindest ein Neutralisationsmittel des Schutzlacks enthält, dem mindestens ein Mittel zum Bilden einer Seife und/oder eines Saponides zugeordnet ist, das aus einem Reaktionsprodukt eines Fettes oder eines Derivates davon mit einer Base oder eines Amins zur Verbesserung der wässrigen Löslichkeit des Schutzlacks beim Entfernen besteht, dadurch gekennzeichnet, daß die Seife und/oder das Saponide während des Aufbringens der Schutzlösung auf den Lack gebildet wird.

4. Verfahren nach Anspruch 3, dadurch gekennzeichnet, daß das Mittel zum Bilden einer Seife und/oder eines Saponides ausgewählt wird aus Fetten, Fettsäuren und Estern.